# EUROPEAN PATENT APPLICATION

(11) **EP 4 704 376 A1**
(43) Date of publication of application: **04.03.2026**
(21) Application number: 24196830.4
(22) Date of filing: 27.08.2024
(51) Int. Cl.: H04L 9/40

(54) **LONG-TERM CYBER ATTACK VARIANT PREDICTION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer-implemented method of generating training data for a cyber-attack detection machine learning, 'ML', model, the computer-implemented method comprising: obtaining a network metadata feature set characteristic of each of one or more known categories of cyber-attack; and generating predicted network metadata representing a plurality of predicted variants of each of the one or more known categories of cyber-attack, based on the respective network metadata feature set.

## Description

### FIELD

The present disclosure relates to generating training data for a cyber-attack detection model.

More specifically, aspects relate to a computer-implemented method of generating training data for a cyber-attack detection machine learning model, a data processing system configured to perform such a method, a computer program comprising instructions which, when the program is executed by a computer, cause the computer to carry out such a method, a computer-readable data carrier having stored thereon such a computer program, and a data carrier signal carrying such a computer program.

### BACKGROUND

A key challenge in cyber security is to continuously keep up with emerging variants of known types of threats. New variants are able to elude security systems by orchestrating attacks with new patterns that don't resemble the previously known variant's signature.

Cyber threat intelligence involves identifying, analysing, and understanding cyber threats, in order to develop response techniques. Threat intelligence is typically applied at 3 levels: (i) security event threat detection technology, (ii) network threat detection technology, and (iii) endpoint threat detection technology. Security event threat detection technology involves integrating data across a network and infrastructure, including authentication, network access, and logs from critical systems. Access to a complete overview of the network and infrastructure allows security analysts to identify potential threats by comparing the identified threat to a threat database of known threats. Network threat detection technology is a technique adopted to understand traffic patterns on a network and monitor traffic within and between trusted networks, as well as the internet, for any suspicious or malicious activities. Network threat detection technologies enable early identification of potential threats or anomalies on a network, which improvers response time when compared with other types of threat detection methods. Network threat detection technology is predominantly used for countering network/system wide attacks. Endpoint threat detection technology is used to provide detailed information about potentially malicious events on user machines, as well as any behavioural or forensic information to aid in investigating threats. Endpoint threat detection technology scans and monitors all devices in real-time for any potential threat and usually adopts a pre-defined rule-based response.

An intrusion detection system (IDS) is an application that monitors a network for malicious activity or policy violations. There are two types of IDS: (a) signature-based, and (b) anomaly-based. A signature-based IDS detects possible threats by looking for specific known patterns (which are indicative of a known threat) in monitored traffic. This approach can easily detect known attacks but fails to detect new attacks, i.e., attacks for which no known pattern is available. Signature-based detection typically uses a previously known/defined unique identifier, also known as indicator of compromise (IOC), which normally takes the form of a specific string of code or a hash of known malicious code to detect and identify potential threats in the network. This process depends on extensive knowledge of security experts, and is time-consuming. Threat modelling is required to understand how a threat performs the attack, and derive the signature. An anomaly-based IDS can detect and adapt to unknown attacks as it focuses on identifying any deviation from normal behaviour of the network traffic flow. Anomaly-based detection typically employs statistical methods to identify unusual patterns in the network. Instead of identifying a particular type of pattern or signature, this approach tries to find an abnormality in the network, and then employs various predefined methods to investigate the abnormal network events to determine the likelihood of these events/observations being related to an attack.

Machine learning (ML)-based network threat detection systems have proven to perform better than traditional intelligence tools to protect networks against cyber-attacks. Existing ML-powered network anomaly and threat detection systems hugely rely on high quantities of labelled data, which is a challenge for real world deployments. The distribution and operation of network threats changes over time and ML-based threat detection systems are highly vulnerable to the evolution of threats, especially malware-type threats, unless they are updated regularly. The four different types of ML-based network threat detection systems are supervised learning, unsupervised learning, semi-supervised learning, and deep learning.

Supervised learning relies on labelled data. The ML system learns the data representations that facilitate identification of threats. These types of supervised models are also known as classification models. Examples include Random Forest & Support Vector Machines (SVMs). Unsupervised learning tries to cluster unlabelled input data to group similar network observations. This approach is useful to identify outliers or to get a picture of network events based on data representation or density. Unsupervised learning can make use of distance-based methods which can include any of K-Means and k-nearest neighbors algorithm (k-NN), and can also make use of density based methods such as histogram-based outlier score (HBOS). The unsupervised approach is not widely adopted as it is primarily used to identify new behaviours or events and to identify potential outliers rather than classifying threats to a specific type/class. The unsupervised network threat and anomaly detection results are not reliable as the accuracy seems to vary from 57% to 80% and it also leads to a very high false positive rate of 20% and above.

Semi-supervised learning methods can employ pseudo labelling based models. Pseudo labelling is a process where a supervised model is trained with small amounts of labelled data and then a portion of unlabelled data is supplied to the trained model to generate pseudo labelled data which further optimises the model prior to deployment.

Deep learning uses artificial neural network (ANN) based architectures. These require large volumes of data and there are various types of implementations such as convolutional neural network models (CNNs), recurrent neural network models (RNNs), autoencoder models, long short-term memory (LSTM) and generative adversarial networks (GANs). The above implementations of deep learning may employ supervised, unsupervised or reinforcement learning (RL) approaches during the model development process.

Statistical and rule-based methods are also employed, involving development of statistical models that can detect unusual patterns in network data. This could be as simple as specifying thresholds and limits, and analysing the observations that fall outside of the specified range. A commonly used approach includes hypothesis testing, histogram, and Z-score. Rule based threat detection functions like the statistical method - these types of systems use predefined sets of rules to identify anomalies on the network data. The rules need to be updated frequently with the evolution of threats to keep the detection system effective. A statistical anomaly system can detect intrusive behaviour that has not been pre-defined, but it is processor intensive and doesn't operate well in dynamic environments. Rules-based systems are not computationally expensive, but activity outside of their rule sets is undetected.

All of the above measures can either detect known threats or unknown threats (as anomalies). None of the above-discussed techniques can detect, identify and verify new variants of threats. This is because an attack pattern of known variants of a threat may change when the variant evolves. When this happens, traditional security systems, like the ones detailed above, may be circumvented by the new signatures of the evolving variant or potentially new variants.

In cyber security applications, the data is diverse and the environment is dynamic, and ML has been replacing significant tasks in the domain to secure devices and networks from evolving threats. However, an ML-powered cyber threat detection model can become ineffective over time as threats constantly evolve to fool security systems. They can compromise devices/networks if they go undetected. There are two key challenges related to the ML model decay that are caused by data drift issues: i) emerging new threats and ii) emerging new variants of known threats. A robust cyber-attack detection system that can support the detection of variants of known threats to avoid ML model decay over the long term is crucial for a reliable system.

### SUMMARY

According to a first aspect, there is provided a computer-implemented method of generating training data for a cyber-attack detection machine learning, 'ML', model, the computer-implemented method comprising: obtaining a network metadata feature set characteristic of each of one or more known categories of cyber-attack; and generating predicted network metadata representing a plurality of predicted variants of each of the one or more known categories of cyber-attack, based on the respective network metadata feature set.

In some examples, the cyber-attack detection ML model is a Siamese neural network; the network metadata feature sets are obtained for a plurality of known categories of cyber-attack; the predicted network metadata represents a plurality of predicted variants of each of a plurality of the known categories of cyber-attack; and the computer-implemented method further comprises: obtaining a plurality of network metadata records, each such record being associated with a known cyber-attack category; and preparing a plurality of triplet losses, wherein each triplet loss comprises: one of the network metadata records as an anchor, predicted network metadata representing a predicted variant of the known cyber-attack category of the anchor as a positive sample, and predicted network metadata representing a predicted variant of one of the plurality of known categories of cyber-attack other than that of the anchor as a negative sample.

In some examples, the predicted network metadata is generated by a generative adversarial network, GAN.

In some examples, the generative adversarial network, GAN, is a conditional generative adversarial network, CT-GAN.

In some examples, the network metadata feature set is obtained from a trained machine learning model for detecting each of one or more known categories of cyber-attack.

In some examples, the trained machine learning model is a random forest classifier.

In some examples, the one or more known categories of cyber-attack comprises any of distributed denial of service 'DDoS', ransomware, port scanning, botnet and/or bruteforce attacks.

According to a second aspect, there is provided a data processing system configured to perform the method of the first aspect.

According to a third aspect, there is provided a computer program comprising instructions which, when the program is executed by a computer, cause the computer to carry out the method of the first aspect.

According to a fourth aspect, there is provided a computer-readable data carrier having stored thereon the computer program of the third aspect.

According to a fifth aspect, there is provided a data carrier signal carrying the computer program of the third aspect.

### BRIEF DESCRIPTION OF THE FIGURES

Aspects of the present disclosure will now be described by way of example with reference to the accompanying figures. In the figures:
Figure 1 schematically illustrates an example cyber-polymorphism system;
Figure 2a is a graph illustrating an exemplary list of features for a specific variant of DDoS;
Figure 2b is a graph illustrating an exemplary list of features for four different variants of DDoS;
Figure 3 is a graph illustrating examples of how thresholds can be set;
Figure 4 schematically illustrates a GAN model;
Figure 5 schematically illustrates a Siamese neural network;
Figures 6a and 6b illustrate an example method; and
Figure 7 schematically illustrates an example data processing system.

### DETAILED DESCRIPTION

The following description is presented to enable any person skilled in the art to make and use the system and/or perform the method of the invention and is provided in the context of a particular application. Various modifications to the disclosed embodiments will be readily apparent to those skilled in the art.

To overcome the above problems of existing cyber-attack detection systems, a cyber-polymorphism system is proposed for detecting variants of known cyber attacks over a long term to increase the lifespan of existing ML models in the face of cyber threat evolution/data drift. A cyber attack occurs when there is an unauthorized action against computer infrastructure that compromises the confidentiality, integrity, or availability of its content. Cyber attacks include any of distributed denial of service (DDoS), ransomware, port scanning, botnet and bruteforce attacks, etc,. A variant of a cyber attack is a particular form of the cyber attack, e.g. a variant of a DDoS cyber attack is user datagram protocol (UDP) flood attack.

In some examples, the proposed method employs a statistical analyser that determines, e.g., from traffic data, a feature set that is characteristic of each of one or more known categories of cyber-attacks. Each feature set is provided to a variant predictor (e.g., a generative adversarial network (GAN)), which generates training data for an ML model (e.g., a Siamese neural network) for detecting variants of the one or more known cyber-attack categories.

This approach improves on the capabilities of existing cyber security systems in several ways, namely by developing attack signatures of known threats, generating possibilities of attack evolution using variant predictors, detection and identification of new and evolved threat variants associated with known threats using an ML model (such as a Siamese network) and, thereby, providing a robust ML model for long-term prediction of threats.

The architecture of an example cyber-polymorphism system can be split into 3 stages. These are: (i) threat detection and thresholding, (ii) GAN-based evolved data generation and, optionally, (iii) Training a Siamese neural network on all variations.

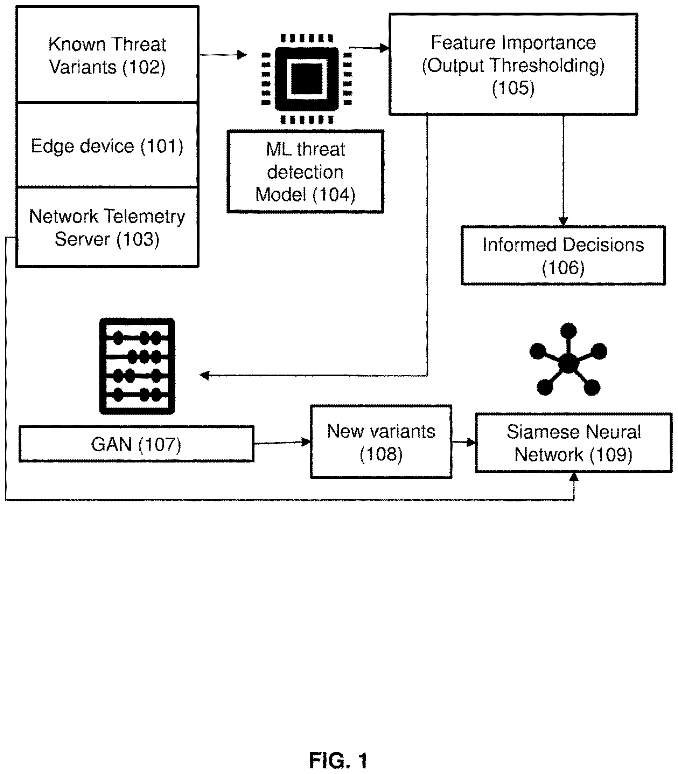

In some examples, the stages combine to establish the architecture and data flow as shown in Fig. 1. The proposed system can be deployed in an edge device 101 or a network telemetry server 103 for the detection of known threat variants 102 as well as any variants that may come about in the long term. Depending on whether the deployment will be edge or server-based, the network metadata used for analysis is derived accordingly from edge devices 101 or network telemetry servers 103. Typically, there are no differences in the network metadata between server- and edge-based deployment. One example of network metadata is NetFlow. NetFlow is a network protocol developed by Cisco^{®} for collecting internet protocol (IP) traffic information and monitoring network flow. This is usually associated with the network layer of the open systems interconnection (OSI) protocol and NetFlow is a type of network metadata that records various features for all IP traffic including features such as 'input packets', 'autonomous system number' (ASN), and 'Protocol'. This data is also used to train an ML-based threat detection model 104. The ML-based threat detection model can be any type of tree-based model such as a decision tree or gradient-boosted tree, or other supervised models such as support vector machines (SVM). The ML-based threat detection model 104, in some examples, is a random forest classifier as this is able to handle unbalanced classes (which are common in cyber security datasets given that there is more benign data than attack data), it is relatively robust to noise and outliers, and has a good accuracy from its ensemble approach. (An ensemble approach in a Random Forest model refers to a combination of multiple decision trees to form a prediction by averaging or voting across multiple trees.) Once trained, this ML-based threat detection model 104 can detect known threats and establish signatures for these known threats in order to arrive at informed decisions, once the signature is post-processed via a feature importance filter 105.

The feature importance filter 105 acts as an output thresholding filter whereby high confidence detections are led to an informed decision 106, and low confidence detections are led to, for example, a GAN 107 configured for informed generation of new variants. The signatures are used as limits or context for the GAN to generate possible attack variants 108 of each known threat. The output of the GAN is passed down to a Siamese Neural Network 109 which is trained to identify attacks and their corresponding variants (by making use of the new variants 108 as training data). Siamese neural networks 109 introduce a way of training neural networks that is specifically designed to learn a similarity between pairs of inputs making them highly effective where the goal is to find relationships between inputs. Siamese neural networks also require relatively little training data as they are learning similarity rather than learning to detect entire classes of inputs. Once trained, the Siamese neural network 109 is deployed as a threat detection system which is robust to attack evolution and caters to data drift issues allowing the system to be used over the long term without the need for retraining.

Several aspects of the cyber-polymorphism system in accordance with examples of the present invention are discussed below.

In one example, the ML-based threat detection model 104 is trained on network metadata (such as the CSE-CiC-IDS2018 dataset, which is widely used for benchmarking detection systems) to detect (a) specific type of threat(s), for example, a distributed denial of service (DDoS) attack (although other types of threats can additionally or alternatively be detected, such as ransomware, port scanning, botnet, bruteforce, etc.).

A DDoS attack is an attack where an attacker floods a server, service, or network with fake requests to prevent legitimate users from accessing, for example, a website and/or use of the service. An attacker can perform a DDoS attack in several ways such as sending a stream of SYN packet (which is a variant of a DDoS attack) to overwhelm the server such that it is preoccupied in the handling of fake requests so that it is not able to respond to legitimate user requests. An attacker can send different variations of DDoS attacks to evade detection by, for example, changing the parameters or frequency of the attack. For example, an attacker may send SYN packets within a specific time window in order to *DDoS* the server. In another example, if a cyber security/threat detection system is able to detect the frequency of the packets, an attacker may change the frequency with which they send the SYN packets or change the packet length to evade detection.

Following on from the example of detecting a DDoS threat, there are different variants of DDoS with varying levels of severity, status (i.e., active or inactive) and techniques. Therefore, an effective ML-based threat detection model may be more reliable if it is trained with a plurality of variants of DDoS attacks. As part of the ML-based threat detection model training (and testing), feature engineering is performed to better understand the effects of features on a target variable (i.e., a variant of a DDoS attack/threat). Each variant of DDoS can be considered a target variable and, therefore, a multi-classification ML-based threat detection model is formed due to multiple targets. This feature engineering process complements the output thresholding process 105 because any invariant features with a significant effect on the target variable (e.g., a SYN flood variant of DDoS) are identified. The invariant features and their corresponding limits are representative of a cyber-attack signature, and, in some examples, act as conditions to pass to the GAN network to generate new variants of a DDoS attack.

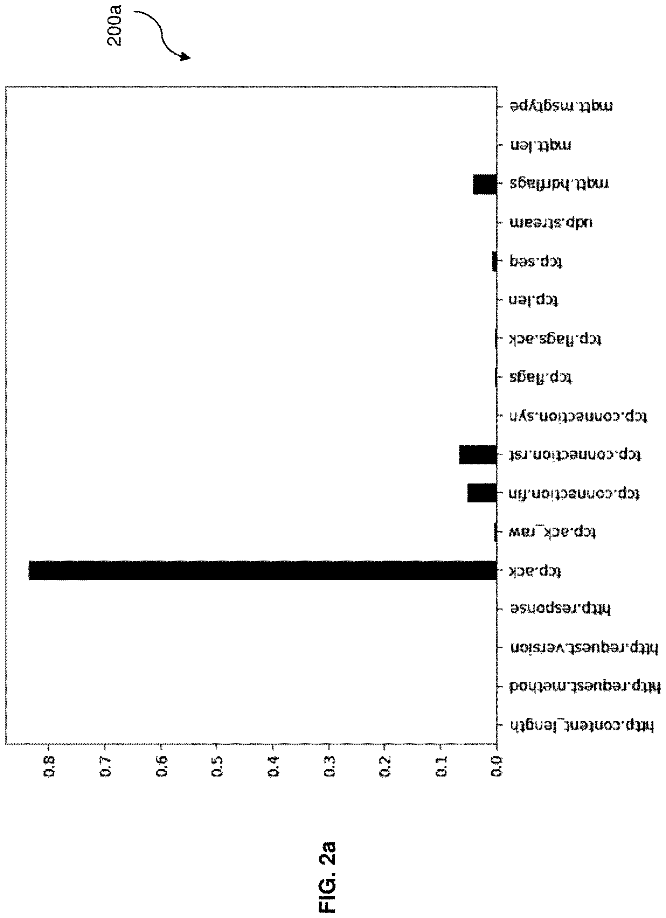

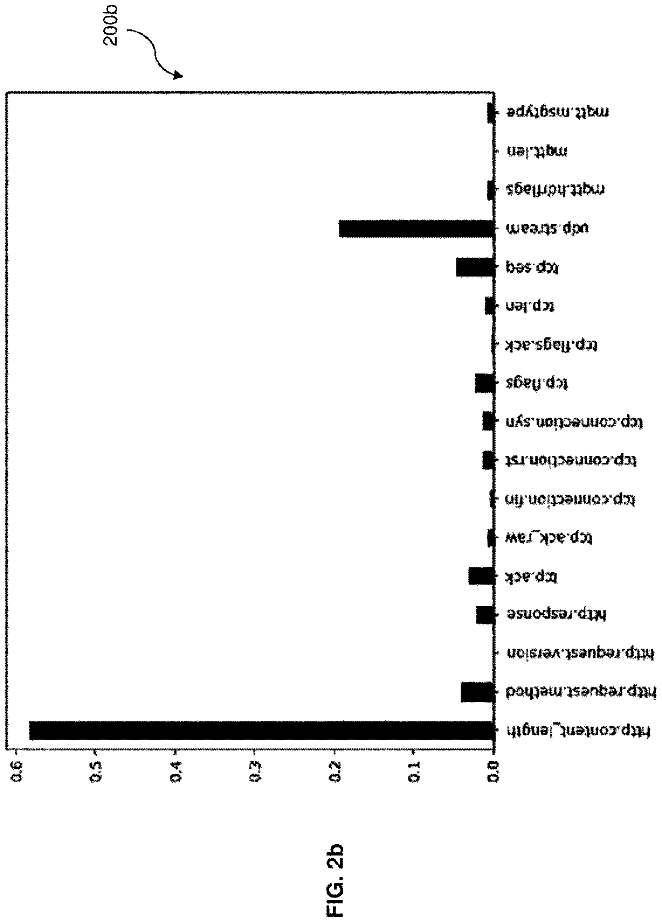

This process is iteratively repeated until the features (also known as predictors) are derived for all the different variants (target threats) of the threat. Figs. 2a and 2b graphically illustrate the list of features for a specific variant of DDoS and a combination of four different variants of DDoS, respectively. Each graph shows identified features of DDoS-type threats on the x-axis and a feature importance metric value of the target on the y-axis. This feature importance metric value represents the effect of an individual feature on predicting the target and this metric is based on the ML-based threat detection model's learning of the data distribution from the training data. The summation of the feature importance metric values will equate to 1.0 (100%). The higher the feature importance metric value, the greater the influence the corresponding feature has in predicting the target variable. As shown in Fig. 2a, the "tcp.ack" feature is an invariant feature that has maximum effect in detecting the "DDoS-SYN Variant", "tcp-ack" is a feature that is present in transmission control protocol (TCP) traffic. ACK is short for "acknowledgement." An ACK packet is any TCP packet that acknowledges receiving a message or series of packets. In the case of the four different types of DDoS variants combined feature data scenario shown in Fig. 2b, "tcp.ack" is a feature with some effect but its significance is far surpassed by the "http.content_length" feature, which along with being used by the ML-based threat detection model to detect the four different variants of threat, also distinguishes/classifies them with appropriate class labels using, for example, a machine learning classifier such as a random forest classifier. "http-content length" is a feature that indicates the length of the message (in bytes) in a hypertext transfer protocol (HTTP) request or response. The feature importances are evaluated to arrive at invariant features with a significant effect on the target variable, thus enabling definition of attack signatures corresponding to each threat.

Once the features/predictors for all of the variants have been derived, metrics such as standard deviation are employed to estimate the minimum and maximum threshold limits for the invariant features. The ML-based threat detection model (e.g. a tree-based model) outputs a list of feature importances, then a human (or automated process) performs a statistical analysis on said feature importances so as to generate parameters for the GAN (which in some examples is a conditional GAN, `CT-GAN'). The GAN can intelligently use the statistical signature to create variants that fit the same pattern so it does not need to have minimum and maximum thresholds explicitly defined beforehand.

The minimum and maximum threshold values for invariant features of multiple variants of a target threat are known as baseline threshold values. These minimum and maximum threshold values serve as a guideline where the known variants fall within the limits.

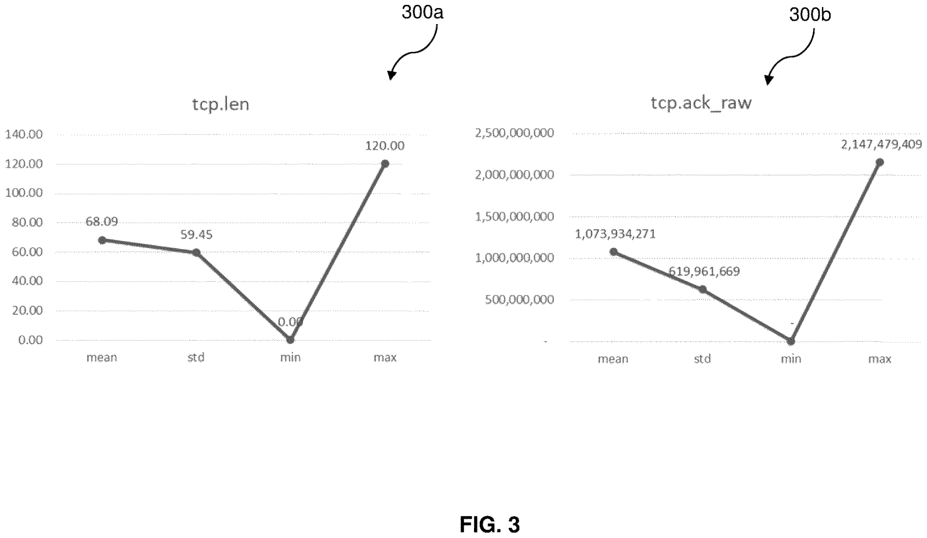

Fig. 3 shows the minimum, maximum, mean, and standard deviation of feature importance metric value for a tcp.len feature in graph 300a and a tcp.ack feature in graph 300b. These invariant features along with their threshold values are used as limits/context for the GAN (e.g., a CT-GAN) to generate a multitude of variants so as to provide a reliable cyber-polymorphism system.

GAN-based models may be used to generate variants of data from known attacks for training a Siamese neural network so that the Siamese is able to detect all possible variants of a target threat. GAN models are used to generate synthetic data. In a typical GAN model, there is a generator and discriminator component. The generator and discriminator are typically trained in an adversarial fashion, whereby data without labels (i.e. the detections with a low confidence) are passed through the GAN model for the GAN model to learn the distribution of the data. Whilst training the GAN, encoded noise of the sample distribution is passed through the generator, which uses the noise to generate sample data. The noise is typically generated from a normal distribution of the data. This sample is sent to the discriminator which classifies the sample as either real or fake, which indicates whether the data is original or synthetically generated, respectively. If the generator generates a sample of low quality, the discriminator has a higher chance of detecting it as a fake sample and this feedback may be used to optimise the generator. Similarly, when the generator generates a high-quality sample, the discriminator is less likely to distinguish between the fake and original so it may be classified as real.

In one example, the GAN model is trained on DDoS-type threats and ransomware-type threats. When the input is noise, the generator is expected to generate one of the two samples. One problem encountered is that there is no control over what type(s) of samples are generated. This limitation led to the creation of a conditional-GAN (CT-GAN) model which enables a user to input conditions alongside the noise so that a trained CT-GAN can generate samples of data based on the accompanying conditions.

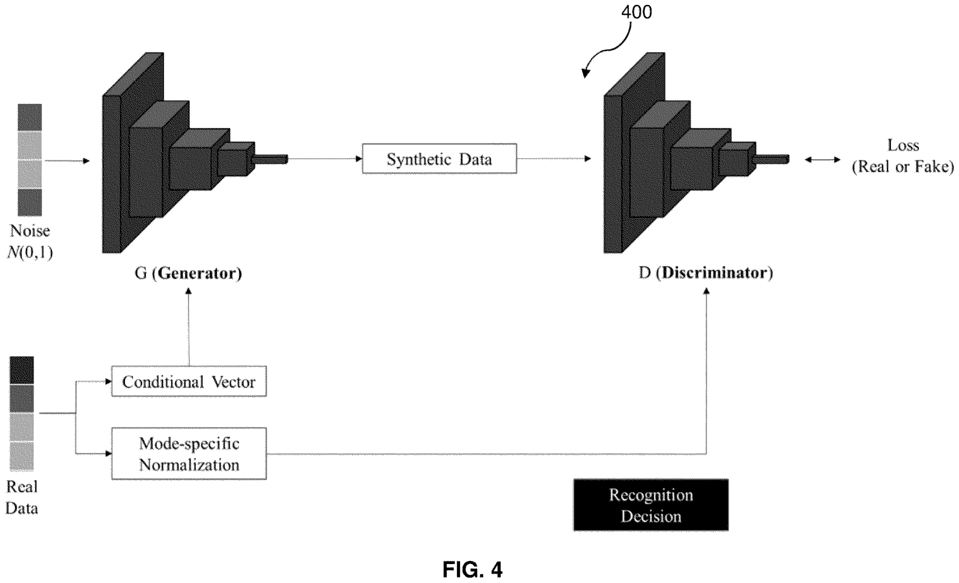

Fig. 4 shows an example architecture 400 of a CT-GAN model. During the training, the CT-GAN model's generator (G) is parameterised to learn and produce realistic samples for the input data using noise and other conditions. The other conditions may be constraints that assist the model with staying within limits to produce a desired output. In some examples, the conditions are provided from the previous step through statistical measures to ensure the output generated by the CT-GAN pertains to the specific attack type under consideration (e.g. DDoS).

The discriminator (D) learns to then distinguish fake (generator output) and real (input data) samples. The advantage of a CT-GAN is the control of the type of sample data being generated. This is very useful in a cyber security context because when a new variant is detected, the quantity of data may be limited. While generative ML models such as GANs can bridge this gap, they wouldn't necessarily be efficient or feasible since they could generate any type of variant samples. The CT-GANs optimise this element and make it feasible for real-world use cases such as in the context of cyber security.

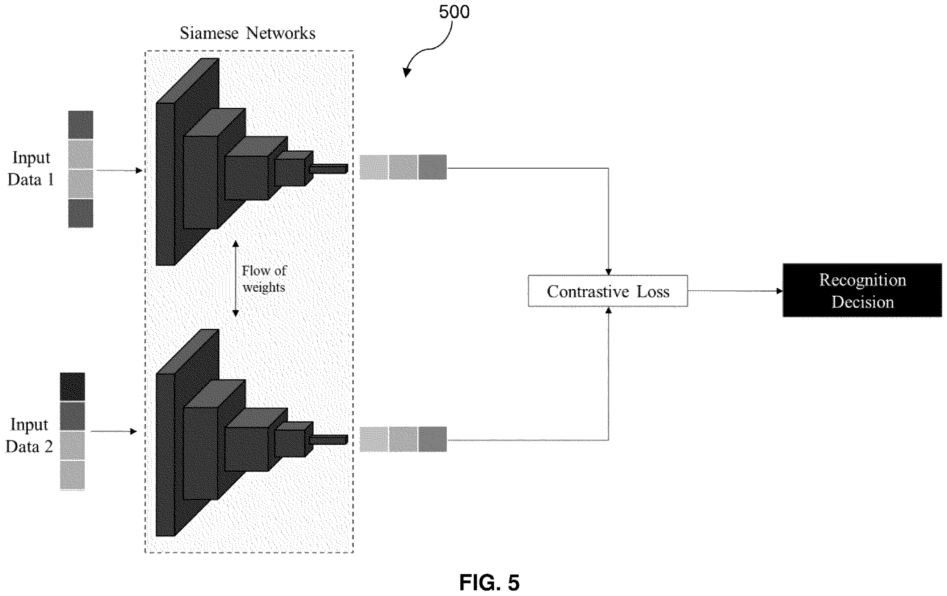

The variants generated by the GAN (or CT-GAN) network are then used to train a Siamese network. A Siamese neural network is a class of neural network architectures that contain two or more identical subnetworks. `Identical' here means that they have the same configuration with the same parameters and weights. Parameter updating is mirrored across both sub-networks. It is used to find the similarity of the inputs by comparing their feature vectors. A Siamese neural network architecture 500 is shown in Fig. 5.

During the training process, a triplet (input data anchor, negative sample, positive sample) is implemented in the Siamese network. The distance between the anchor and positive inputs should be smaller than the distance between the anchor and negative inputs. The contrastive Loss function is used to learn embeddings in which vector embeddings of two similar points have a low Euclidean separation and vector embeddings of two dissimilar points have a large Euclidean separation. This same principle is used to train the Siamese neural network to learn to attribute variations of an attack to the same attack and thus capture them.

The Siamese neural network model in this scenario will be trained using data on known variants and newly generated variants (from the CT-GAN) of the threat. The Siamese neural network model takes in an anomalous observation sample, compares it with known variants, and outputs a score. This output score is a probabilistic score of how similar or different the anomalous sample is to previously known variants of a threat. This probabilistic score may be referred to as a similarity score, ranging between 0 and 1, where 0 indicates a different type of threat or anomaly (i.e., weak similarity), and 1 indicates strong similarity which is indicative of a potential new variant.

During the training phase, the Siamese neural network model learns to output a high score for variants of the same attack and low otherwise. Once the Siamese is trained in such a manner, at inference time (i.e. when the capabilities learned by the Siamese during the training process are put to work on real network traffic) it is able to detect any new variants that may come up after attack evolution in the long term which would otherwise have been deemed unknown and could have passed through to critical infrastructure undetected.

This section describes the end-to-end working architecture of one example of the cyber-polymorphism system with a DDoS-type threat use case.

DDoS attacks can be performed in three different ways: (i) volume-based attacks (user datagram protocol, 'UDP', and internet control message protocol, 'ICMP', floods) (ii) protocol-based attacks (SYN floods & fragmented packets); and (iii) application-based attacks (GET/POST floods & attacks targeting Windows vulnerabilities). Therefore, multiple variants of DDoS can be orchestrated by the attacker. Further, the attack patterns of known variants may change when the variant evolves into a new variant. When this happens, traditional security systems may be tricked by the new signatures of new variants.

In this example, a ML-based threat detection model (e.g., a random forest classifier) is trained on five variants of DDoS threat. The model can detect observations of threats associated with those five variants by analysing the network metadata (e.g., NetFlow data). The ML-based threat detection model is used to create attack signatures after analysing feature importances and identifying the invariant features and their corresponding thresholds. These attack signatures are used as context and are then passed to a generative stage (using a CT-GAN) which creates plausible future variants of the DDOS attacks. The conditions of the CT-GAN originate from the attack signatures containing invariant features and their corresponding limits/thresholds.

Once new attack variants are generated by the CT-GAN, these (along with known variants) are used to train a Siamese neural network model with the objective of comparing attack variants and being able to identify which variant corresponds to which attack type. A final model - a trained Siamese neural network - is thus the solution that is deployed in place of or complemented with other intrusion detection systems where it enables detection of any future variants of attacks that come about as a result of attack evolution and/or data drift.

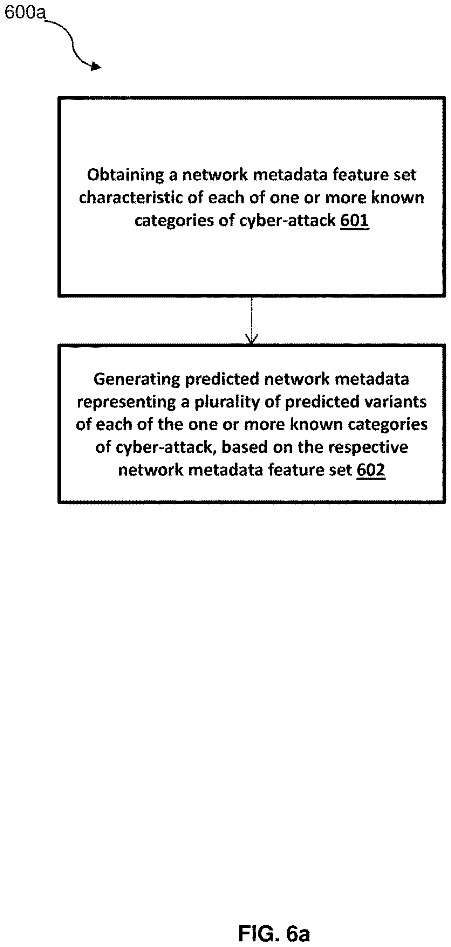

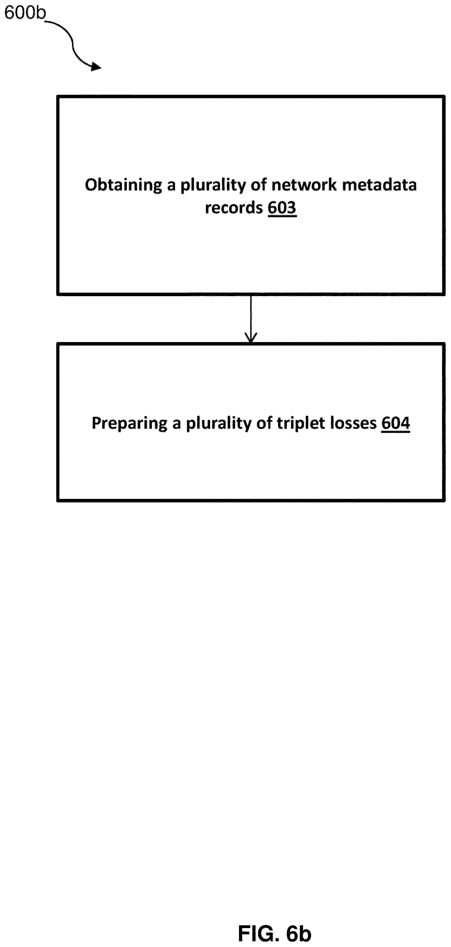

Figs. 6a and 6b are flowcharts of an example method 600a and 600b, respectively, which could make use of the cyber-polymorphism system of Fig. 1. Method 600b comprises optional method steps that are combinable with the method of 600a. The methods in flowcharts 600a and 600b are performed to generate training data for a cyber-attack detection machine learning, ML, model.

At step 601, a network metadata feature set characteristic of each of one or more categories of cyber-attack is obtained. In some examples, the network metadata feature set is obtained from a trained model for detecting each of one or more known categories of cyber-attack. In some examples, the trained model is a machine learning model such as a random forest classifier. In some examples, the categories of cyber-attack comprise any of DDoS, ransomware, port scanning, botnet and/or brute force attacks.

At step 602, a prediction of network metadata representing a plurality of predicted variants of each of the one or more known categories of cyber-attack is generated, based on the respective metadata feature set. In some examples, the predicted network metadata is generated by a generative adversarial network (GAN). In some examples, the generative adversarial network (GAN) is a conditional generative adversarial network (CT-GAN).

At optional step 603 of Fig. 6b, a plurality of network metadata records is obtained, each such record being associated with a known cyber-attack category. At optional step 604, a plurality of triplet losses are prepared, wherein each triplet loss comprises: one of the network metadata records as an anchor, predicted network metadata representing a predicted variant of the known cyber-attack category of the anchor as a positive sample, and predicted network metadata representing a predicted variant of one of the plurality of known categories of cyber-attack other than that of the anchor as a negative sample. In some examples, the cyber-attack detection ML model is a Siamese neural network, the network metadata feature sets are obtained for a plurality of known categories of cyber-attack; and the predicted network metadata represents a plurality of predicted variants of each of a plurality of the known categories of cyber-attack.

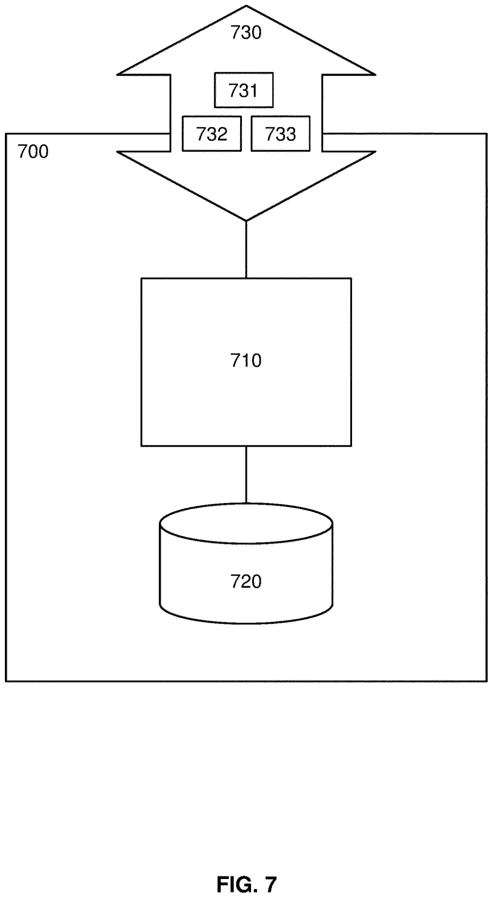

Figure 7 schematically illustrates an example data processing system (DPS) 700 capable of performing the methods 600a and 600b of Figures 6a and 6b, respectively. It comprises a processor 710 operably coupled to both a memory 720 and an interface (I/O) 730.

The memory 720 can optionally comprise computer program instructions which, when the program is executed by the processor 710, cause the data processing system 700 to carry out the method 600a and/or 600b. Alternatively, or additionally, the interface 730 can optionally comprise one or both of a physical interface 731 configured to receive a data carrier having such instructions stored thereon and a receiver 732 configured to receive a data carrier signal carrying such instructions.

The receiver 732, when present, can be configured to receive messages. It can comprise one or more wireless receiver modules and/or one or more wired receiver modules. The interface 730 can further comprise a transmitter 733 configured to transmit messages. The transmitter 733 can comprise one or more wireless transmitter modules and/or one or more wired transmitter modules.

### INTERPRETATION NOTES

Embodiments of the invention will be apparent to those skilled in the art from consideration of the specification. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

## Claims

1. A computer-implemented method of generating training data for a cyber-attack detection machine learning, 'ML', model, the computer-implemented method comprising:
obtaining a network metadata feature set characteristic of each of one or more known categories of cyber-attack; and
generating predicted network metadata representing a plurality of predicted variants of each of the one or more known categories of cyber-attack, based on the respective network metadata feature set.

2. The computer-implemented method of claim 1, wherein:
the cyber-attack detection ML model is a Siamese neural network;
the network metadata feature sets are obtained for a plurality of known categories of cyber-attack;
the predicted network metadata represents a plurality of predicted variants of each of a plurality of the known categories of cyber-attack; and
the computer-implemented method further comprises:
obtaining a plurality of network metadata records, each such record being associated with a known cyber-attack category; and
preparing a plurality of triplet losses, wherein each triplet loss comprises:
one of the network metadata records as an anchor,
predicted network metadata representing a predicted variant of the known cyber-attack category of the anchor as a positive sample, and
predicted network metadata representing a predicted variant of one of the plurality of known categories of cyber-attack other than that of the anchor as a negative sample.

3. The computer-implemented method of claim 1 or 2, wherein the predicted network metadata is generated by a generative adversarial network, GAN.

4. The computer-implement method of claim 3, wherein the generative adversarial network, GAN, is a conditional generative adversarial network, CT-GAN.

5. The computer-implemented method of any preceding claim, wherein the network metadata feature set is obtained from a trained machine learning model for detecting each of one or more known categories of cyber-attack.

6. The computer-implemented method of claim 5, wherein the trained machine learning model is a random forest classifier.

7. The computer-implemented method of any preceding claim, wherein the one or more known categories of cyber-attack comprises any of distributed denial of service 'DDoS', ransomware, port scanning, botnet and/or brute force attacks.

8. A data processing system configured to perform the method of any preceding claim.

9. A computer program comprising instructions which, when the program is executed by a computer, cause the computer to carry out the method of any of claims 1 to 7.

10. A computer-readable data carrier having stored thereon the computer program of claim 9.

11. A data carrier signal carrying the computer program of claim 9.
